# EUROPEAN PATENT APPLICATION

(11) **EP 4 138 165 A1**
(43) Date of publication of application: **22.02.2023**
(21) Application number: 21382773.6
(22) Date of filing: 20.08.2021
(51) Int. Cl.: H01M 8/1246, H01M 8/2404, H01M 8/2428, H01M 8/2465, H01M 8/12, H01M 4/88

(54) **AN INTEGRATED SINGLE 3D PRINTING SYSTEM-BASED PROCESS FOR MANUFACTURING A MONOLITHIC SOLID OXIDE CELL (SOC) STACK**

(71) Applicant: FUNDACIÓ INSTITUT DE RECERCA EN ENERGIA DE CATALUNYA, 08930 Barcelona (ES); Institució Catalana de Recerca I Estudis Avançats, 08010 Barcelona (ES)
(72) Inventor: TARANCÓN RUBIO, Albert, BARCELONA (ES); MORATA GARCÍA, Alex, SANT ADRIÀ DE BESÒS (ES); TORRELL FARO, Marc, BARCELONA (ES); PESCE, Arianna, OVADA (IT); HORNÉS MARTÍNEZ, Aitor, BARCELONA (ES); NÚÑEZ EROLES, Marc, ANDORRA LA VELLA (AD); KOSTRETSOVA, Natalia, BARCELONA (ES); ALAYO BUENO, Nerea, BILBAO (ES)
(74) Representative: Ponti & Partners, S.L.P

(57) **Abstract**

The present invention relates to a process of manufacturing a monolithic solid oxide cell (SOC) stack and to the solid oxide cell obtained through this process.

## Description

### Field of the invention

The present invention relates to a process of manufacturing a monolithic solid oxide cell (SOC) stack and the solid oxide cell obtained through this process.

### Background of the invention

Conventional fabrication of SOC stacks involve expensive and time-consuming multi-step manufacturing process including: tape casting, screen printing, firing, shaping, and high-temperature thermal treatments. Since current ceramic processing techniques present limitations in terms of shape and design (more than 60 steps), industrially fabricated SOFC cells and stacks are expensive.

US 10,236,528 B2 disclose solid oxide electrochemical devices, methods for making the electrochemical devices, and methods of using the electrochemical devices. In particular, the electrochemical devices comprise a plurality of stacked functional layers that are formed by a combination of three-dimensional (3D) extrusion printing and two-dimensional (2D) casting techniques.

US 6,838,203 B2 discloses a monolithic fuel cell which is made up of fuel passages and oxidizer passages, in the form of a monolithic block. The monolith is made from triplex layers of anode-electrolyte-cathode and a multifunctional substrate that provides interconnects between triplex layers, provides gas diffusion and allows waste products to flow out through it to be extracted.

US 8,268,510 B2 discloses a fuel cell component including a substrate disposed adjacent at least one radiation-cured flow field layer. The flow field layer is one of disposed between the substrate and a diffusion medium layer, and disposed on the diffusion medium layer opposite the substrate. The flow field layer has at least one of a plurality of reactant flow channels and a plurality of coolant channels for the fuel cell. The fuel cell component may be assembled as part of a repeating unit for a fuel cell stack. A method for fabricating the fuel cell component and the associated repeating unit for the fuel cell is also disclosed.

The present inventors have developed an original 3D printing process able to fabricate in a single step customized plug and play SOC stacks. The present process has redefined the fabrication paradigm of SOCs enabling straightforward manufacturing of such devices replacing the traditional multi-step manufacturing processes with an "integrated single step" via printing layer-by-layer consecutive active materials directly stacked one onto the other to generate fuel cells.

The present process makes possible SOC designs with near free-shape, which increases the flexibility of the fabrication process and widens the range of applications due to easy customization of the product even to portable/transportation sector (inaccessible up to now). Additionally, the present process allows the fabrication of joint-less SOCs, removing the weakest point of the current technology, therefore increasing their durability.

Energetically speaking, the present process allows obtaining a cost reduction of more than 60% per kW together with a reduction of the initial required investment in up to one order of magnitude while opens the possibility of manufacturing currently inaccessible complex design solutions: *e.g.* joint-free stacks (high pressure applications), integration of the fluidics in the electrodes, integration of current collection in the printed design, integration of structural elements to improve the mechanical behavior and thermal behavior and reduction of the thickness of all involved layers (introducing the novel concept of "self-supported stacks"). All these exclusive solutions will clearly improve the performance of the SOC stacks against dramatic failure and long-term degradation.

Furthermore, the present process reduces waste of critical raw materials compared to traditional techniques, prevents the loss of valuable Critical Raw Materials (CRM) with a reduction of up to 80% of advanced ceramics.

Accordingly, the present invention provides a process for manufacturing a monolithic solid oxide cells (SOCs) stack which provides a plurality of advantages which have not disclosed in the current fabrication processes.

### Summary of the invention

In a first aspect, the present invention relates to a process of manufacturing a monolithic solid oxide cell (SOC) stack.

In a second aspect, the present invention relates to the solid oxide cell obtained through this process according to the first aspect.

### Brief description of the drawings

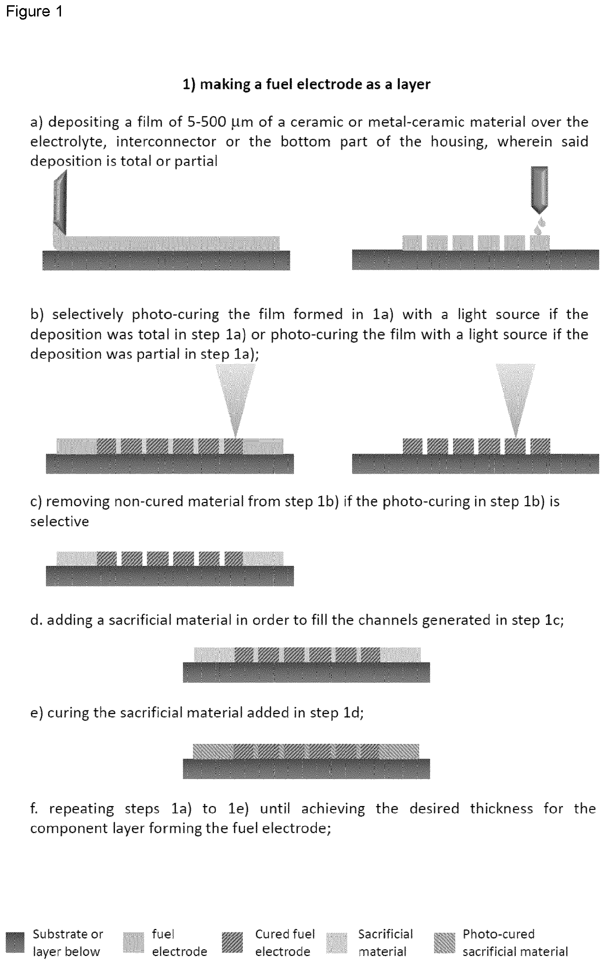

Figures show schematically the process of the present invention as set forth in claim 1, i.e.: figure 1) making a fuel electrode as a layer;

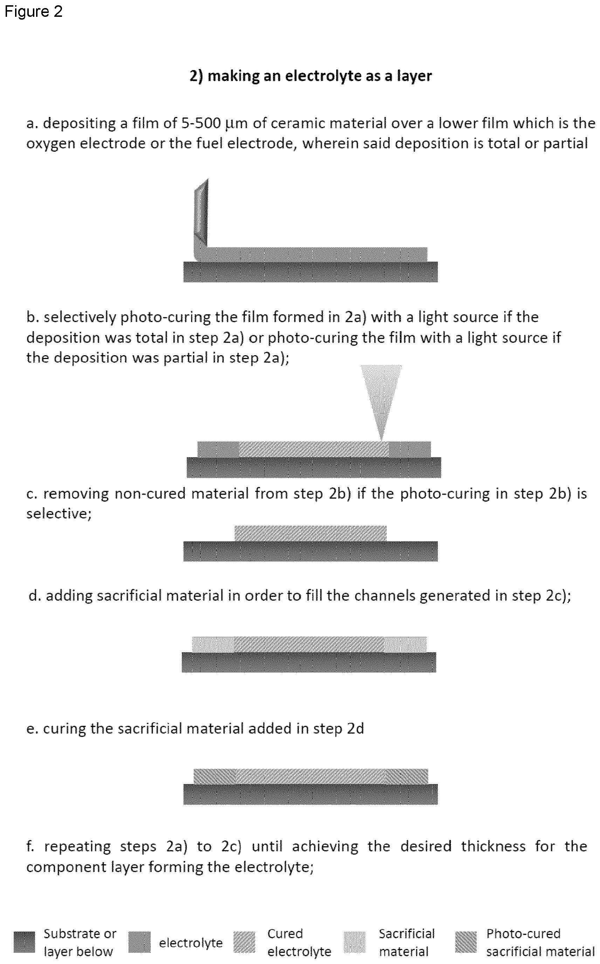

figure 2) making an electrolyte as a layer;

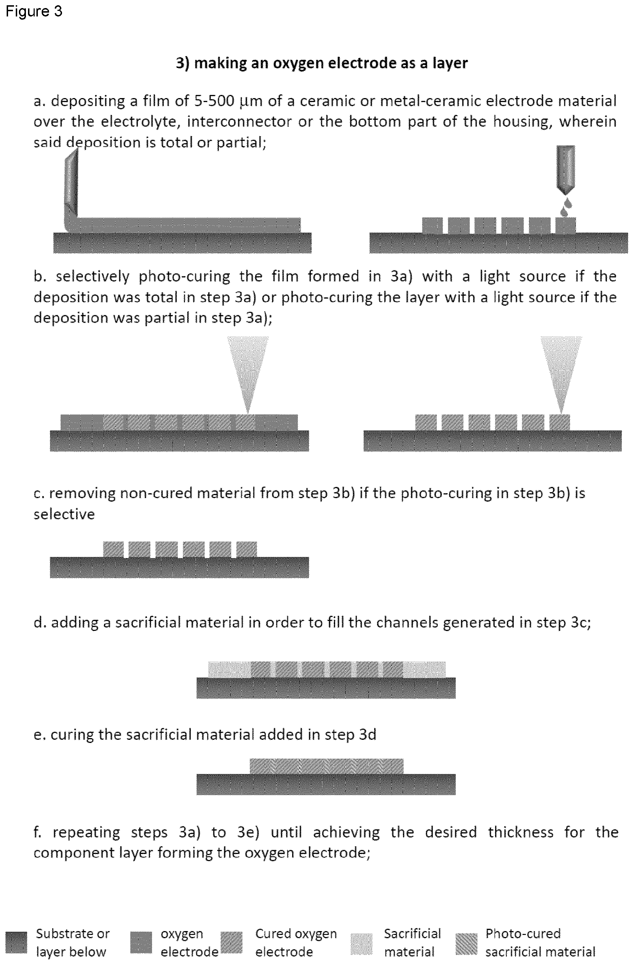

figure 3) making an oxygen electrode as a layer;

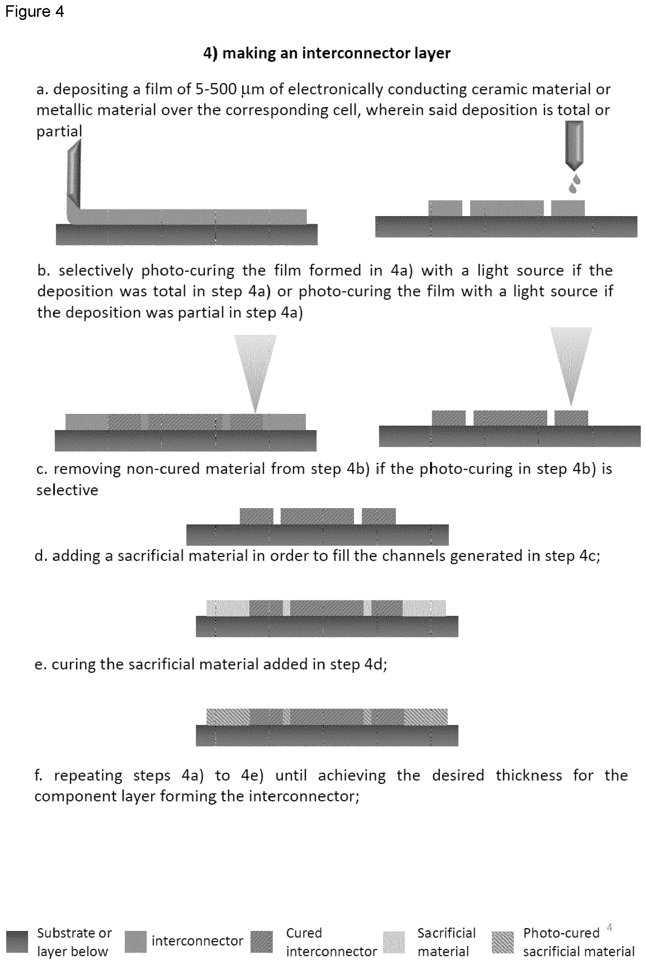

figure 4) making an interconnector layer;

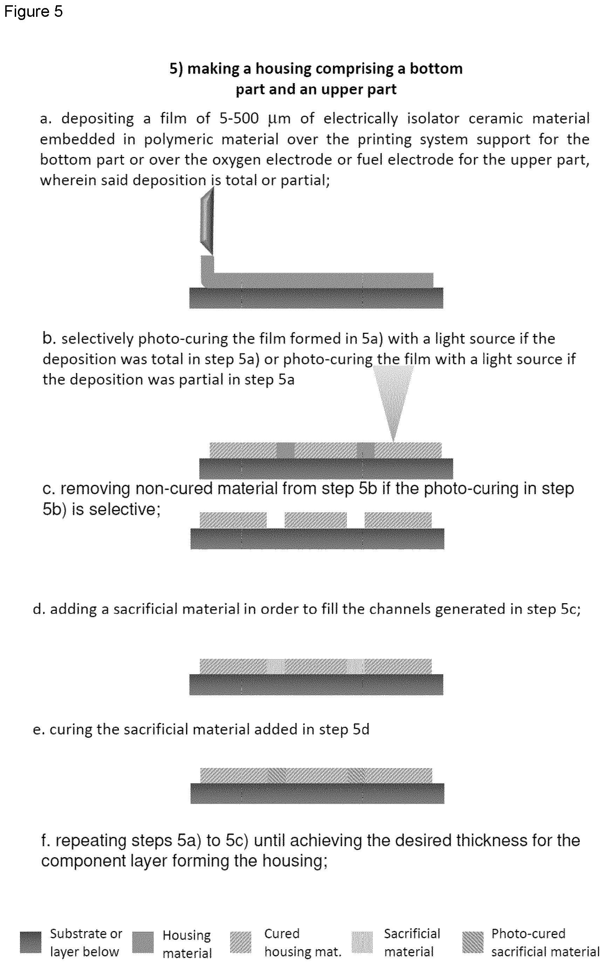

figure 5) making a housing comprising a bottom part and an upper part

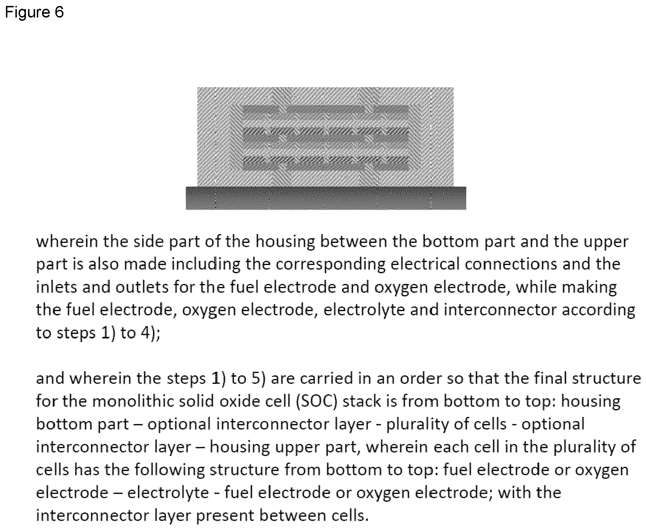

figure 6) final result with completed stack.

### Detailed description of the invention

In a first aspect, the present invention relates to an integrated single 3D printing system-based process for manufacturing a monolithic solid oxide cell (SOC) stack, wherein said SOC stack comprises a plurality of individual cells, where each cell includes a fuel electrode, an electrolyte and an oxygen electrode, and has an interconnector layer present between cells, further wherein the SOC stack is surrounded by a housing;
wherein said 3D printing system integrates a stereolithography equipment (SLA) with direct ink-writing (DIW) equipment;
which process comprises **independently** the steps of:
   1) making a fuel electrode as a layer by
      a. depositing a film of 5-500 µm of a ceramic or metal-ceramic (cermet) material over the electrolyte, interconnector or the bottom part of the housing, wherein said deposition is total or partial;
      b. selectively photo-curing the film formed in 1a) with a light source if the deposition was total in step 1a) or photo-curing the film with a light source if the deposition was partial in step 1a);
      c. removing non-cured material from step 1b) if the photo-curing in step 1b) is selective;
      d. adding a sacrificial material in order to fill the channels generated in step 1c;
      e. curing the sacrificial material added in step 1d;
      f. repeating steps 1a) to 1e) until achieving the desired thickness for the component layer forming the fuel electrode;
   2) making an electrolyte as a layer by
      a. depositing a film of 5-500 µm of ceramic material over a lower film which is the oxygen electrode or the fuel electrode, , wherein the ceramic material should have a conductivity higher than 0.1 S/cm² above 600 °C, and wherein said deposition is total or partial;
      b. selectively photo-curing the film formed in 2a) with a light source if the deposition was total in step 2a) or photo-curing the film with a light source if the deposition was partial in step 2a);
      c. removing non-cured material from step 2b) if the photo-curing in step 2b) is selective;
      d. adding a sacrificial material in order to fill the channels generated in step 2c;
      e. curing the sacrificial material added in step 2d;
      f. repeating steps 2a) to 2e) until achieving the desired thickness for the component layer forming the electrolyte;
   3) making an oxygen electrode as a layer by
      a. depositing a film of 5-500 µm of a ceramic or metal-ceramic (cermet) material over the electrolyte, interconnector or the bottom part of the housing, wherein said deposition is total or partial;
      b. selectively photo-curing the film formed in 3a) with a light source if the deposition was total in step 3a) or photo-curing the film with a light source if the deposition was partial in step 3a);
      c. removing non-cured material from step 3b) if the photo-curing in step 3b) is selective;
      d. adding a sacrificial material in order to fill the channels generated in step 3c;
      e. curing the sacrificial material added in step 3d;
      f. repeating steps 3a) to 3e) until achieving the desired thickness for the component layer forming the oxygen electrode;
   4) making an interconnector layer by
      a. depositing a film of 5-500 µm of electronically conducting ceramic material or metallic material with a conductivity of 0.3-40 S/cm at a temperature between 600 °C-1000 °C over the corresponding cell; wherein said deposition is total or partial;
      b. selectively photo-curing the film formed in 4a) with a light source if the deposition was total in step 4a) or photo-curing the film with a light source if the deposition was partial in step 4a);
      c. removing non-cured material from step 4b) if the photo-curing in step 4b) is selective;
      d. adding a sacrificial material in order to fill the channels generated in step 4c;
      e. curing the sacrificial material added in step 4d;
      f. repeating steps 4a) to 4e) until achieving the desired thickness for the component layer forming the interconnector;
   5) making a housing comprising a bottom part and an upper part,
      wherein the bottom part and the upper part are made by:
         a. depositing a film of 5-500 µm of electrically isolator ceramic material embedded in polymeric material over the printing system support for the bottom part or over the oxygen electrode or fuel electrode for the upper part; wherein said deposition is total or partial;
         b. selectively photo-curing the film formed in 5a) with a light source; if the deposition was total in step 5a) or photo-curing the film with a light source if the deposition was partial in step 5a);
         c. removing non-cured material from step 5b) if the photo-curing in step 5b) is selective;
         d. adding a sacrificial material in order to fill the channels generated in step 5c;
         e. curing the sacrificial material added in step 5d;
         d. repeating steps 5a) to 5e) until achieving the desired thickness for the component layer forming the housing;
      wherein the side part of the housing between the bottom part and the upper part is also made including the corresponding electrical connections and the inlets and outlets for the fuel electrode and oxygen electrode, while making the fuel electrode, oxygen electrode, electrolyte and interconnector according to steps 1) to 4);
      and wherein the steps 1) to 5) are carried in an order so that the final structure for the monolithic solid oxide cell (SOC) stack is from bottom to top: housing bottom part - optional interconnector layer - plurality of cells - optional interconnector layer - housing upper part, wherein each cell in the plurality of cells has the following structure from bottom to top: fuel electrode or oxygen electrode - electrolyte - fuel electrode or oxygen electrode; with the interconnector layer present between cells.

**"Independently"** in the context of the present invention means that steps 1) to 5) do not need to be performed in the logical order 1) to 5), but in a suitable order so that the final structure is as defined in claim 1:
housing bottom part - optional interconnector layer - plurality of cells - optional interconnector layer - housing upper part,
wherein each cell in the plurality of cells has the following structure from bottom to top: fuel electrode or oxygen electrode - electrolyte - fuel electrode or oxygen electrode;
with the interconnector layer present between cells.

**"Selectively"** in the context of the present invention means exposing particular areas of the film surface in order to create patterns, i.e. channels, inlet, outlet,...

The term "is selective" in steps c) for each of the steps 1) to 5) means that if in step b) the layes was selectively cured, the non-cured part will be removed, whereas if in step b) the layer was totally cured, there will be no non-cured part and obviously there will be no need for removal.

Unless otherwise explained, all technical and scientific terms used herein have the same meaning as commonly understood by one of ordinary skill in the art to which this disclosure belongs. The singular terms "a", "an", "one" and "the" include plural referents unless context clearly indicates otherwise. Similarly, the word "or" is intended to include "and" unless the context clearly indicate otherwise.

In the context of the present invention, "Stereolithography" or SLA relates to the family of additive manufacturing technologies. SLA machines are built around the photopolymerization principle, using a light source, such as laser, to cure liquid or viscous resin into a hardened material. The main difference between types of SLA technologies lies in the end use material, being plastics the most common material up to now. Nevertheless, other materials like ceramics are being in high demand in recent years.

In the context of the present invention, Direct-Ink-Writing (DIW) is an extrusion-based additive manufacturing method. In DIW, the liquid-phase "ink" is dispensed out of small nozzles under controlled flow rates and deposited along defined paths to fabricate 3D structures layer-by-layer.

In the context of the present invention, the material suitable to be used as a "fuel electrode" is defined in the following table:

**Table 1. Materials for the Fuel electrode**

| Type of material | Ceramic or metal-ceramic (cermet) material with electronic or mixed ionic-electronic conduction capabilities. |
|---|---|
| Unique properties | Ceramic or cermet materials that is: |
| | • Stable in reduction conditions |
| | • Presents thermal expansion coefficient (TEC) close to the one from the electrolyte to avoid mismatch |
| | • Catalytic properties in H2/H2O conversion |
| | • Porose microstructure (30-50% porosity) |
| | • Stable at temperatures > 600ºC |
| List of specific materials | - Nickel-based materials (for example, Ni-O/YSZ (yttria-stabilized zirconia), |
| | - Ni-O/SSZ (Niquel Oxide Scandia stabilized Zirconia), |
| | - Ni-O/GDC (gadolinium doped ceria), |
| | - Ni-O/SDC (samarium doped ceria), |
| | - Ni-O/YDC (yttrium doped ceria), |
| | - Lanthanum-based materials: for example, La₁₋ₓSrₓCrO₃ (LSC) La₁₋ₓSrₓCr_{1-y}M_{y}O₃, LST (lanthanum strontium titanate), |
| | - Cobalt-based materials, |
| | - Platinum-based materials |
| | - Other compounds such as CuO₂/CeO₂/YSZ, CuO₂/YSZ, Cu/YZT (titania doped YSZ), CuO₂/CeO₂/SDC (samarium doped ceria), CeO₂/GDC, TiO₂/GDC, Ru/YSZ. |
| Preferred material | Ni-O/YSZ |

In the context of the present invention, the material suitable to be used as an "electrolyte" is defined in the following table:

**Table 2. Materials for the Electrolyte**

| Type of material | Ceramic material with high ionic conductivity (see below the meaning of high ionic conductivity) |
|---|---|
| Unique properties | Ceramic material: |
| | • high ionic conductivity (conductivity > 0.1 S/cm2) at temperatures > 600ºC, |
| | • Densified material, avoiding connected porosity (H2 gas tight), >96% of theoretical density |
| | • Stable in reduction/oxidation atmosphere |
| | • Stable at temperatures > 600º C |
| List of specific materials | - Zirconia-based materials (for example, YSZ, SSZ, CaSZ (i.e. Y, Sm, Ca-stabilized zirconia), |
| | - Ceria-based materials (for example, GDC, SDC, YDC, CDC (i.e. Gd, Sm, Y, Ca doped ceria)), |
| | - Lanthanum-based materials (for example, LSGM (Lanthanum strontium gallium magnesium oxide), |
| | - LSGMC (Lanthanum strontium gallium magnesium cobalt oxide), |
| | - LSGMF (Lanthanum strontium gallium magnesium iron oxide), |
| | - LSGMCF (Lanthanum strontium gallium magnesium cobalt iron oxide), |
| | - LaAlO₃-based compounds) and other compounds such as BCY (barium cerium yttrium oxide), |
| | - Bismuth oxide-based compounds, |
| | - Pyrochlorores-based compounds, and |
| | - Barium and strontium brownmillerites. |
| Preferred material | *Yttria-stabilized zirconia* (YSZ) or ceria (CeO₂) |

In the context of the present invention, the material suitable to be used as an "oxygen electrode" is defined in the following table:

**Table 3. Materials for the Oxygen electrode**

| Type of material | Ceramic or metal-ceramic (cermet) material with electronic or mixed ionic-electronic conduction capabilities. |
|---|---|
| Unique properties | Ceramic or cermet materials that is: |
| | • Stable in oxidation conditions |
| | • Presents thermal expansion coefficient (TEC) close to the one from the electrolyte to avoid mismatch |
| | • Catalytic properties in O₂/O²⁻ conversion |
| | • Porose microstructure (30-50% porosity) |
| | • Stable at temperatures > 600ºC |
| List of specific materials | - Lanthanum-based materials (for example, LSM (lanthanum strontium manganite), |
| | - LSF (lanthanum strontium ferrite), |
| | - LSC (lanthanum strontium cobaltite), |
| | - LSCF (lanthanum strontium cobalt ferrite), |
| | - LSMC (*lanthanum* strontium cobaltite manganite), |
| | - LSMCr (*lanthanum* strontium manganate chromate), |
| | - LCM (*Lanthanum* Calcium Manganite), |
| | - LSCu (Sr-doped *lanthanum* cuprate), |
| | - LSFN (Nb-doped lanthanum strontium ferrite), |
| | - LNF (lanthanum Nickel Iron Oxide), |
| | - LSCN (*lanthanum* strontium cobalt nickel oxide), |
| | - LBC (Cerium-doped *lanthanum* bromide), |
| | - LNC (*Lanthanum* Nickel Cobaltite), |
| | - LSAF (lanthanum strontium aluminate phosphors), |
| | - LSCNCu *(lanthanum* strontium cobalt nickel cuprate), |
| | - LSFNCu *lanthanum* strontium iron nickel cuprate), |
| | - LNO (Lanthanum nickelate)), |
| | - Gadolinium-based materials (for example, GSC (*gadolinium* strontium cobaltite), |
| | - GSM (*gadolinium* strontium manganite)), |
| | - Praseodymium-based materials (for example, PCM (praseodymium calcium manganite), |
| | - PSM (praseodymium strontium manganite), |
| | - PBC (praseodymium barium cobaltite)), |
| | - Strontium-based materials (for example, SSC (Samarium *Strontium* Cobaltite), |
| | - NSC (neodymium strontium cobaltite), |
| | - BSCCu (bismuth strontium calcium cuprate)) and |
| | - Yttria-based materials (for example, YCCF (*Yttrium* Calcium Cobalt Ferrite) |
| | - YBCu (yttrium barium cuprate)). |
| Preferred material | LSM or LSM/YSZ |

In the context of the present invention, the material suitable to be used as an "interconnector" is defined in the following table:

**Table 4. Materials for the Interconnector**

| Type of material | Electronically conducting ceramic or metallic material |
|---|---|
| Unique properties | Ceramic or metallic material, preferably being a good electrical conductor (0.3-40 S/cm) at high temperature, preferably between 600 ºC-1000 ºC. |
| List of specific materials | Base: |
| | - chromium alloys, |
| | - ferritic stainless steels, |
| | - austenitic stainless steels, |
| | - iron super alloys and |
| | - nickel super alloys) |
| | Coating: |
| | - LSM, |
| | - LCM, |
| | - LSC, |
| | - LSFeCo (lanthanum strontium iron cobaltite), |
| | - LSCr (lanthanum strontium chromite) |
| | - LaCoO3). |
| | - Further examples are lanthanum chromitesor lanthanum oxides. |
| Preferred material | Lanthanum oxides. |

In the context of the present invention, the material suitable to be used as a "housing" is defined in the following table:

**Table 5. Materials for the Housing**

| Type of material | Ceramic material with thermal expansion coefficient close to the one from the electrolyte |
|---|---|
| Unique properties | • Presents thermal expansion coefficient (TEC) close to the one from the electrolyte to avoid mismatch |
| | • Electrically isolator material |
| | • Densified material, avoiding connected porosity (H2 gas tight), >96% of theoretical density |
| List of specific materials | - *Yttria-stabilized zirconia* (YSZ), |
| | - Ceria (CeO₂) |
| | - Alumina (Al₂O₃) |
| Preferred material | *Yttria-stabilized zirconia* (YSZ) or ceria (CeO₂) |

It is also noted that when building the bottom part of the housing which is the very first part in the manufacture of a monolithic solid oxide cell (SOC) stack according to the present invention, this is usually deposited over a printing platform.

In a further preferred embodiment, the light source is selected from Laser, LED and UV, preferably Laser.

Depending on the intended use of the solid oxide cell (SOC), this can be implemented as a solid oxide fuel cell (SOFC), a solid oxide electrolyzer cell (SOEC) or a co-solid oxide electrolyzer cell (co-electrolysis by solid oxide electrolysis cells). In the fuel cell mode (SOFC), the SOC generates electricity by electrochemical reaction of a fuel (hydrogen, hydrocarbons, alcohols, etc.) with an oxidant (oxygen in the air). In the electrolysis mode (SOEC), SOC functions as an electrolyzer (in this case, referred to as a solid oxide electrolysis cell or SOEC), producing hydrogen (from water) or chemicals such as syngas (from mixtures of water and carbon dioxide) when coupled with an energy source (fossil, nuclear, renewable). Co-solid oxide fuel cell is a device that can operate efficiently in both fuel cell and electrolysis operating modes.

In a further preferred embodiment, the removal of non-cured material is carried out by laser milling or by a flow of pressurized air.

In a further preferred embodiment, the fuel electrode has an inlet for hydrogen or fuel and an outlet for water.

In another further preferred embodiment, the oxygen electrode has an inlet for hydrogen oxygen or air and an outlet for oxygen or air.

Once the process according to the first aspect of the invention is completed, the resulting monolithic solid oxide cell (SOC) stack is usually subjected to a thermal treatment for removing organic components. This treatment is named "debinding" and is carried out a temperature between 400 and 900 °C. Said resulting monolithic solid oxide cell (SOC) stack is also usually subjected to a sintering step for compacting the ceramic material and is carried out at a temperature between 1200 and 1700 °C.

In a second aspect, the present invention relates to the solid oxide cell obtained through this process according to the first aspect.

It is noted that any of the embodiments disclosed herein for the compound or the composition can be taken alone or combined with any other embodiment disclosed herein unless the context specifies otherwise. In other words, for example, a preferred option of a defined feature can be combined with a more or less preferred option of another feature.

Described below are examples by way of illustration of the invention without limiting thereof in anyway.

### Example of manufacturing a monolithic solid oxide cell (SOC) stack according to the invention

The following steps were carried out:
Step 1. Deposition of a 25 µm yttria-stabilized zirconia (YSZ) layer over the printing platform for the bottom part to create the base of the housing. Selectively photo-cure the first layer with laser to create the outlet and inlet. Non-cured material is removed. Created channels are filled with sacrificial material and this is cured. Step 1 is repeated several times to obtain a 1 mm thick YSZ layer.
Step 2. Selectively deposit a lanthanum oxide layer on top of the previous YSZ layer with a thickness of 100 µm. This layer will be used as interconnector. The layer is cured with laser. Deposition-curing step is repeated as many times as necessary to obtain a 1 mm thick interconnector layer. At the same time, the lateral walls of the housing are deposited (YSZ layer) and cured.
Step 3. Fuel electrode: partially deposit a film of 50 µm of NiO-YSZ over the interconnector. Photo-cure the film with laser. Sacrificial material is added in order to fill the generated channels and cure. This step will be repeated as many times as necessary to achieve a 1 mm layer. At the same time, the lateral walls of the housing are deposited (YSZ layer) and cured.
Step 4. Electrolyte: 100 µm of yttria-stabilized zirconia (YSZ) layer is deposited over the fuel electrode. Selectively cure the layer with laser. Remove non cured material. Add sacrificial material to fill the gaps or channels. Repeat this step until 500 µm layer is achieved. At the same time, the lateral walls of the housing are deposited (YSZ layer) and cured.
Step 5. Oxygen electrode: partially deposit a film of 100 µm of lanthanum strontium manganite (LSM-YSZ) over the interconnector. Photo-cure the film with laser. Sacrificial material is added in order to fill the generated channels and cure. This step will be repeated as many times as necessary to achieve a 1 mm layer. At the same time, the lateral walls of the housing are deposited (YSZ) and cured.

Steps 2-6 are repeated ten times in order to generate a 10 cells stack.

On top of the last cell an interconnector layer is deposited (Step 2).

Finally, the top cover of the housing is fabricated. A film of 25 µm of yttria-stabilized zirconia (YSZ) is deposited over the last interconnector layer. Selectively photo-cure the first layer with laser to create the outlet and inlet. Non-cured material is removed. This step is repeated several times to obtain a 1 cm thick YSZ layer.

## Claims

1. An integrated single 3D printing system-based process for manufacturing a monolithic solid oxide cell (SOC) stack, wherein said SOC stack comprises a plurality of individual cells, where each cell includes a fuel electrode, an electrolyte and an oxygen electrode, and has an interconnector layer present between cells, further wherein the SOC stack is surrounded by a housing;
wherein said 3D printing system integrates a stereolithography equipment (SLA) with direct ink-writing (DIW) equipment;
which process comprises **independently** the steps of:
1) making a fuel electrode as a layer by
a. depositing a film of 5-500 µm of a ceramic or metal-ceramic (cermet) material over the electrolyte, interconnector or the bottom part of the housing, wherein said deposition is total or partial;
b. selectively photo-curing the film formed in 1a) with a light source if the deposition was total in step 1a) or photo-curing the film with a light source if the deposition was partial in step 1a);
c. removing non-cured material from step 1b) if the photo-curing in step 1b) is selective;
d. adding a sacrificial material in order to fill the channels generated in step 1c;
e. curing the sacrificial material added in step 1d;
f. repeating steps 1a) to 1e) until achieving the desired thickness for the component layer forming the fuel electrode;
2) making an electrolyte as a layer by
a. depositing a film of 5-500 µm of ceramic material over a lower film which is the oxygen electrode or the fuel electrode, wherein the ceramic material should have a conductivity higher than 0.1 S/cm² above 600 °C, and wherein said deposition is total or partial;
b. selectively photo-curing the film formed in 2a) with a light source if the deposition was total in step 2a) or photo-curing the film with a light source if the deposition was partial in step 2a);
c. removing non-cured material from step 2b) if the photo-curing in step 2b) is selective;
d. adding a sacrificial material in order to fill the channels generated in step 2c;
e. curing the sacrificial material added in step 2d;
f. repeating steps 2a) to 2e) until achieving the desired thickness for the component layer forming the electrolyte;
3) making an oxygen electrode as a layer by
a. depositing a film of 5-500 µm of a ceramic or metal-ceramic (cermet) material over the electrolyte, interconnector or the bottom part of the housing, wherein said deposition is total or partial;
b. selectively photo-curing the film formed in 3a) with a light source if the deposition was total in step 3a) or photo-curing the film with a light source if the deposition was partial in step 3a);
c. removing non-cured material from step 3b) if the photo-curing in step 3b) is selective;
d. adding a sacrificial material in order to fill the channels generated in step 3c;
e. curing the sacrificial material added in step 3d;
f. repeating steps 3a) to 3e) until achieving the desired thickness for the component layer forming the oxygen electrode;
4) making an interconnector layer by
a. depositing a film of 5-500 µm of electronically conducting ceramic material or metallic material with a conductivity of 0.3-40 S/cm at a temperature between 600 °C-1000 °C over the corresponding cell; wherein said deposition is total or partial;
b. selectively photo-curing the film formed in 4a) with a light source if the deposition was total in step 4a) or photo-curing the film with a light source if the deposition was partial in step 4a);
c. removing non-cured material from step 4b) if the photo-curing in step 4b) is selective;
d. adding a sacrificial material in order to fill the channels generated in step 4c;
e. curing the sacrificial material added in step 4d;
f. repeating steps 4a) to 4e) until achieving the desired thickness for the component layer forming the interconnector;
5) making a housing comprising a bottom part and an upper part,
wherein the bottom part and the upper part are made by:
a. depositing a film of 5-500 µm of electrically isolator ceramic material embedded in polymeric material over the printing system support for the bottom part or over the oxygen electrode or fuel electrode for the upper part; wherein said deposition is total or partial;
b. selectively photo-curing the film formed in 5a) with a light source; if the deposition was total in step 5a) or photo-curing the film with a light source if the deposition was partial in step 5a);
c. removing non-cured material from step 5b) if the photo-curing in step 5b) is selective;
d. adding a sacrificial material in order to fill the channels generated in step 5c;
e. curing the sacrificial material added in step 5d;
d. repeating steps 5a) to 5e) until achieving the desired thickness for the component layer forming the housing;
wherein the side part of the housing between the bottom part and the upper part is also made including the corresponding electrical connections and the inlets and outlets for the fuel electrode and oxygen electrode, while making the fuel electrode, oxygen electrode, electrolyte and interconnector according to steps 1) to 4);
and wherein the steps 1) to 5) are carried in an order so that the final structure for the monolithic solid oxide cell (SOC) stack is from bottom to top: housing bottom part - optional interconnector layer - plurality of cells - optional interconnector layer - housing upper part, wherein each cell in the plurality of cells has the following structure from bottom to top: fuel electrode or oxygen electrode - electrolyte - fuel electrode or oxygen electrode; with the interconnector layer present between cells.

2. Process according to claim 1, wherein said light source is selected from Laser, LED and UV.

3. Process according to claim 1 or 2, wherein the solid oxide cell (SOC) is a solid oxide fuel cell (SOFC).

4. Process according to claim 1 or 2, wherein the solid oxide cell is a solid oxide electrolyzer cell (SOEC).

5. Process according to claim 1 or 2, wherein the solid oxide cell is a co-solid oxide electrolyzer cell.

6. Process according to any of claims 1 to 5, wherein the fuel electrode is made of a material as shown in the list of specific materials in Table 1.

7. Process according to any of claims 1 to 6, wherein the electrolyte is made of a material as shown in the list of specific materials in Table 2.

8. Process according to any of claims 1 to 7, wherein the oxygen electrode is made of a material as shown in the list of specific materials in Table 3.

9. Process according to any of claims 1 to 8, wherein the interconnector is made of a material as shown in the list of specific materials in Table 4.

10. Process according to any of claims 1 to 9, wherein the housing is made of a material as shown in the list of specific materials in Table 5.

11. Process according to any of claims 1 to 10, wherein the removal of non-cured material is carried out by laser milling or by a flow of pressurized air.

12. Process according to any of claims 1 to 11, wherein the fuel electrode has an inlet for hydrogen or fuel and an outlet for water.

13. Process according to any of claims 1 to 12, wherein the oxygen electrode has an inlet for hydrogen oxygen or air and an outlet for oxygen or air.
